# EUROPÄISCHE PATENTSCHRIFT

(11) **EP 0 882 400 B1**
(45) Veröffentlichungstag und Bekanntmachung des Hinweises auf die Patenterteilung: **03.01.2001**
(21) Anmeldenummer: 98109918.7
(22) Anmeldetag: 29.05.1998
(51) Int. Cl.: A21C 3/06, A21C 9/00

(54) **Herstellungsverfahren für einzelne Teigstücke und Schneid- und/oder Stanzwerkzeug dafür**
Manufacturing method for individual dough pieces and cutting and/or punching tool therefor
Procédé de fabrication de pièces individuelles de pâte et outil de coupe et/ou de poinçonnage associé

(30) Priorität: 04.06.1997 DE 19723414
(43) Veröffentlichungstag der Anmeldung: 09.12.1998
(73) Patentinhaber: A. FRITSCH GMBH & CO. KG, D-97348 Markt Einersheim (DE)
(72) Erfinder: Bernhardt, Udo, 97346 Iphofen (DE)
(74) Vertreter: Götz, Georg, Dipl.-Ing.

(56) Entgegenhaltungen:
- EP-A- 0 482 917
- EP-A- 0 569 103
- EP-A- 0 670 114
- BE-A- 902 440
- DE-C- 3 903 746
- FR-A- 2 486 771

## Beschreibung

Die Erfindung betrifft ein Verfahren zur Herstellung einzelner Teigstücke aus einer kontinuierlichen Teigbahn, indem in den Endabschnitt der Teigbahn - frei von Restteig - eine schräg oder quer zur Bahnlängsrichtung verlaufende Reihe von separaten, jeweils in sich geschlossenen Konturen ausgeschnitten wird, welche den Teigstücken entsprechen, und diese in Reihe aneinanderliegenden Konturen bzw. Teigstücke vom Bahnende entfernt und zur Weiterverarbeitung voneinander quer oder schräg zur Bahnlängsrichtung auseinanderbewegt und abgelegt werden. Ferner betrifft die Erfindung ein Schneid- und/oder Stanzwerkzeug zur Durchführung des Verfahrens, welches Werkzeug mit der Teigstückkontur versehen und von Antriebsmitteln betätigbar und zum Zusammenwirken mit einem gegenüberliegenden Tisch als Auf-, Unter- oder Ablage bzw. Unterteil für das Teigband und die daraus geschnittenen Teigstücke ausgebildet ist.

Ein Teigstück-Herstellungsverfahren der eingangs genannten Art wird mit einer bekannten Vorrichtung zum Herstellen von Backwerk aus Teigstücken realisiert (EP 0 382 105 A1). Ein ausgewalztes Teigband wird durch ein erstes Transportband herangeführt. Beim Durchlauf unter einer Schneidwalze wird dieses Teigband in eine Vielzahl von dreieckigen Teigschnittstücken aufgeschnitten, die beim wiedergegebenen Beispiel in fünf Reihen nebeneinander derart angeordnet sind, daß in jeder Reihe die Spitze der dreieckigen Teigstücke einander entgegen gerichtet sind (Restteigfreiheit). Die Längsschnitte zwischen den einzelnen Reihen werden durch eine gesonderte Schneidwalze bewirkt. Sodann müssen die einzelnen Reihen der aus dem Teigband ausgeschnittenen Teigstücke zunächst in Förderrichtung auseinandergerückt werden. Hierzu dienen gesonderte Greiforgane, mit eigenem Schlitten und Führungen. Die Teigstücke der einen Reihe weisen mit ihrer Spitze beispielsweise nach rechts, die Teigstücke der nachfolgenden Reihe hingegen nach links, jeweils quer zur Förderrichtung. Um die Teigstücke nun derart drehen zu können, daß sie gleichsinnig liegen, müssen sie auch quer zur Transportrichtung des Bandes auseinandergerückt werden. Dies wird ebenfalls durch die genannten, gesondert ausgebildeten, geführten und getragenen Greifereinheiten bewerkstelligt. Nachdem die Teigstücke mit den Greifereinheiten auch gedreht worden sind, so daß die Dreiecksbasis in die Förderrichtung weist, müssen die Teigstücke wieder seitlich zusammengerückt werden. Auch dies wird mit den gesonderten Greifeinheiten durchgeführt. Ein weiterer Nachteil des bekannten Verfahrens besteht darin, daß die Greifer die Teigstücke vielfach nicht zentrisch oder symmetrisch erfassen. Dies führt zu einer exzentrischen Drehung und damit unpräzisen oder gar fehlerhaften Positionierung der Teigstücke. Zum Ausgleich sind komplexe Positioniersteuerungen und/oder sonstige Mittel wie den Greifern nachgeschaltete Ausrichtlineale erforderlich.

Der Erfindung liegt die Aufgabe zugrunde, ein Verfahren zur Herstellung einzelner Teigstücke aus einer kontinuierlichen Teigbahn so weiterzuentwickeln, daß der dafür notwendige Aufwand an Maschinenkomponenten und Geräten sowie Konstruktion vermindert und zudem die Zuverlässigkeit der entsprechenden Herstellungsmaschine erhöht und dessen Wartbarkeit verbessert werden kann. Insbesondere soll auch der Ablauf der notwendigen Herstellungsschritte an sich vereinfacht und gleichzeitig in seiner Effizienz (Verarbeitungsdurchsatz an Teig) erhöht sein. Zudem ist bei möglichst vermindertem Steuerungsaufwand eine präzisere Positionierung zu erreichen.

Zur Lösung dieser Aufgabe wird bei einem Verfahren mit den eingangs genannten Merkmalen erfindungsgemäß vorgeschlagen, daß zum Entfernen, zum Auseinanderbewegen und zum Ablegen der ausgeschnittenen Teigstücke ganz oder teilweise die Schneidmittel verwendet werden, die zum Ausschneiden der Teigstückreihe am Bahnende eingesetzt wurden, und nach dem Ablegen die Schneidmittel für ein erneutes Ausschneiden zum (stirnseitigen) Bahnende zurückbewegt werden. Nach der Erfindung werden also die mehreren, separaten Schneidmittel oder Stanzwerkzeuge nicht nur zum Ausschneiden der Teigstücke, sondern auch zu deren Transport, Verschieben, Auseinanderbewegen quer zur Transportrichtung (Spreizen) und zum Ablegen verwendet. Ein und dasselbe Schneid- oder Stanzwerkzeug bewirkt also sowohl das Stanzen, Trennen der Teigstücke von der stirnseitigen Teigbahn, Auseinanderbewegen in Teigbahn-Querrichtung (Spreizen) und gegebenenfalls auch das Drehen. Aufwendige Maschinenkomponenten wie Greif- bzw. Pick-Einrichtungen zum Spreizen und Drehen lassen sich einsparen. Die zentrische oder symmetrische Erfassung beim Schneiden der Teigstück-Konturen bleibt für die weitere Positionierung und das Ablegen der Teigstücke erhalten, weil das Teigstück noch im Schneidwerkzeug selbst geführt und abgelegt wird. Spezielle Steuerungs- und Ausgleichsmittel zur Kompensation von Ungenauigkeiten können entfallen.

Gemäß einer Ausbildung des erfindungsgemäßen Verfahrens wird die Teigstückkontur im Folgeschnittverfahren hergestellt: Eine vor den beweglichen Schneidmitteln oder Stanzwerkzeugen installierte, stationäre Stanz- oder Schneideinrichtung (zum Beispiel Schneidwalze mit radial vorstehenden Schneidkanten) schneidet beispielsweise in Teigbahn-Längsrichtung die Basis einer gleichschenklig dreieckförmigen Teigstückkontur, während die Schenkel mit den zur späteren Teigstückbewegung eingesetzten Schneidmitteln geschnitten werden.

Nach einer Konkretisierung der allgemeinen, erfinderischen Grundidee werden in dem Zeitraum zwischen dem Ausschneiden der Teigstücke und deren Ablegen die die ausgeschnittenen Teigstücke mit sich führenden Schneidmittel zunächst vom Bahnende linear in Bahnlängsrichtung entfernt, voneinander in Bahn-Querrichtung auseinander bewegt und dann - gegebenenfalls nach vorherigem Drehen - abgelegt. Sodann wird dieser Ablauf umgekehrt wiederholt, bis die Schneidmittel über das Teigbahnende wieder angelangt sind. Bei dieser Bewegungsfolge wandert der Drehpunkt oder die Drehachse der Schneidkontur des Schneidmittels in Transportrichtung vom Teigbandende unter Durchführung einer Winkelbewegung von der Teigbandperipherie weg und wieder zurück, wobei die Winkelbewegung umgekehrt wird.

Um zu verhindern, daß sich die Teigstücke bei ihrem Transport innerhalb der Schneidwerkzeuge verformen oder gar herausrutschen, ist nach einer Ausbildung der Erfindung vorgesehen, daß den die Teigstücke bewegenden Schneid- oder Stanzmitteln Greifer- oder Pick-Einrichtungen, beispielsweise in Form von länglichen und spitz endenden Greifdornen, beigeordnet und in Eingriff mit den Teigstücken gebracht werden.

Nach einer anderen Ausbildung der Erfindung wird unmittelbar nach dem Schneiden und/oder Stanzen der Teigstückkonturen für das weitere Entfernen vom Teigbandende, Auseinanderbewegen voneinander und das Ablegen der Teigstücke der Druck auf das Stanzwerkzeug-Oberteil gegen das Stanzwerkzeug-Unterteil soweit zurückgenommen, daß das Oberteil mit seinen Schneidkanten auf der Oberfläche des Stanzwerkzeug-Unterteils gleiten und/oder darüber bewegt werden kann. Als Unterteil für das Stanz- oder Schneidwerkzeug kann dabei beispielsweise ein Förderband für die ausgewalzte Teigbahn dienen. Dadurch lassen sich die ausgeschnittenen Teigstücke mit dem jeweiligen Schneidwerkzeug besonders leicht vom Teigbandende über eine Oberfläche beispielsweise eines Förderbandes bewegen und positionieren.

Beim Stanzen von dicken Teigen kann es zweckmäßig sein, das Teigförderband während des Schneid- oder Stanzvorganges anzuhalten und dann wieder in Bewegung zu setzen bzw. getaktet zu bewegen. Dabei ist es günstig, wenn nach jedem Schneid- oder Stanzvorgang das Teigförderband in Teigförderrichtung um eine Strecke verfahren wird, die der Abmessung der Kontur oder Teigstücks in Bahnlängsrichtung entspricht. Weist diese Kontur bzw. das Teigstück die Form eines gleichschenkligen Dreiecks auf, von dem die Basisseite in oder parallel zur Teigbahnlängsrichtung verläuft, ist das Verfahren des Förderbands jeweils um eine halbe Länge der Basisseite bis zur nächsten Takt-Pause zweckmäßig. Andererseits kann aus Gründen der Produktionsleistung der kontinuierliche Transport des Teigbandes vorteilhaft sein, wobei steuerungstechnisch der Teigbandvorschub und der Stanzhub miteinander zu synchronisieren sind.

Zur Lösung der obigen Aufgabe wird bei einem Schneid- oder Stanzwerkzeug mit den eingangs genannten Merkmalen, das zur Durchführung des erfindungsgemäßen Verfahrens geeignet ist, vorgeschlagen, eine Schneidelemente mit der Teigstückkontur aufweisende Halte- oder Schneidplatte und eine Teigausstoßplatte anzuordnen, wobei die beiden Platten gegeneinander in Schneid- oder Stanzhubrichtung mittels der Antriebsmittel und/oder eines Federelements (rück-) verstellbar verbunden sind, und die Teigausstoßplatte unmittelbar neben den Schneidelementen und/oder an diesen gleitbar mit einem Verstellhub angeordnet ist, der sich beidseits der Schneidkante des Schneidelements erstreckt, so daß das jeweilige Teigstück zwischen den Schneidelementen ausgestoßen oder davon abgestreift werden kann. Mit diesem Stanzwerkzeug in zweiteiliger, in sich verstellbarer Grundstruktur lassen sich die Ausstoß- und Halteelemente für eine zuverlässige Ablage der Teigstücke und für eine teigfreie Rückführung der Schneidelemente zum stirnseitigen Teigbahnende einsetzen.

Nach einer Erfindungsalternative bezüglich der Schneid- und/oder Stanzwerkzeuge weist eine Halte- oder Schneidplatte Schneidelemente mit der Teigstückkontur oder Teilen davon auf. Ferner sind ein oder mehrere, als Greifer und/oder Pick-Einrichtungen dienende Dornelemente vorgesehen, die an der Halteplatte innerhalb der Schneidelemente so angeordnet sind, daß ihre Spitzen den Teigstücken zugeordnet sind.

Mit jeder dieser Erfindungsalternativen für Stanz- und/oder Schneidwerkzeuge, die auch miteinander kombiniert werden können, wird der Vorteil erzielt, daß diese Werkzeuge nicht nur zum eigentlichen Zweck des Ausschneidens von Teigstükken, sondern auch zu deren Transport, Auseinanderspreizen und Ausrichtung zusätzlich eingesetzt werden können. Dies erspart die Anordnung zusätzlicher, separater Funktionskomponenten wie in eigenen Schlitten und Führungen angeordnete, separate Greifereinheiten. Zudem lassen sich mit den erfindungsgemäßen Werkzeugen die frisch geschnittenen Teigstücke rechtzeitig vom Teigbahnende wegbewegen, bevor sie miteinander verkleben.

Nach einer besonderen Ausbildung ist die dem Teigstück zugewandte Unterseite der ersten oder zweiten Halteplatte mit Erhöhungen, vorstehenden (Schneid-) Kanten und/oder Vertiefungen versehen, deren Verlauf und Konturen Schlitzen, textlichen oder figürlichen Darstellungen, Markierungen oder sonstigen Informationen entsprechen und zum Einprägen in die Teigstück-Oberseite vorgesehen sind. Mit dieser Ausbildung lassen sich die eine oder andere Halteplatte gleichsam als Informationsträger für diverse Konturen, Schlitze, Muster usw. einsetzen. Vorzugsweise erfolgt das Aufbringen von Markierungen auf die Teigstück-Oberseite im Stadium des Schneidens oder Stanzens. Damit lassen sich beispielsweise Markierungen auf der Teigstück-Oberseite anbringen, die in einem späteren Verfahrensstadium als Aufbring- bzw. Auflegestellen für Zutaten wie Marmelade oder Früchte dienen.

Weitere Einzelheiten, Merkmale, Wirkungen und Vorteile auf der Basis der Erfindung ergeben sich aus der nachfolgenden Beschreibung bevorzugter Ausführungsbeispiele der Erfindung sowie aus den Zeichnungen. Diese zeigen in:
- Figur 1a und 1b: in schematischer Draufsicht zwei unterschiedliche Phasen eines ersten Ausführungsbeispiels des erfindungsgemäßen Herstellungsverfahrens,
- Figur 2a-2d: in schematischer Draufsicht die vier Phasen eines zweiten Ausführungsbeispiels des erfindungsgemäßen Herstellungsverfahrens,
- Figur 3a - c: eine hubparallele Schnittansicht auf ein erfindungsgemäßes Stanzwerkzeug in drei unterschiedlichen Verfahrensabschnitten.

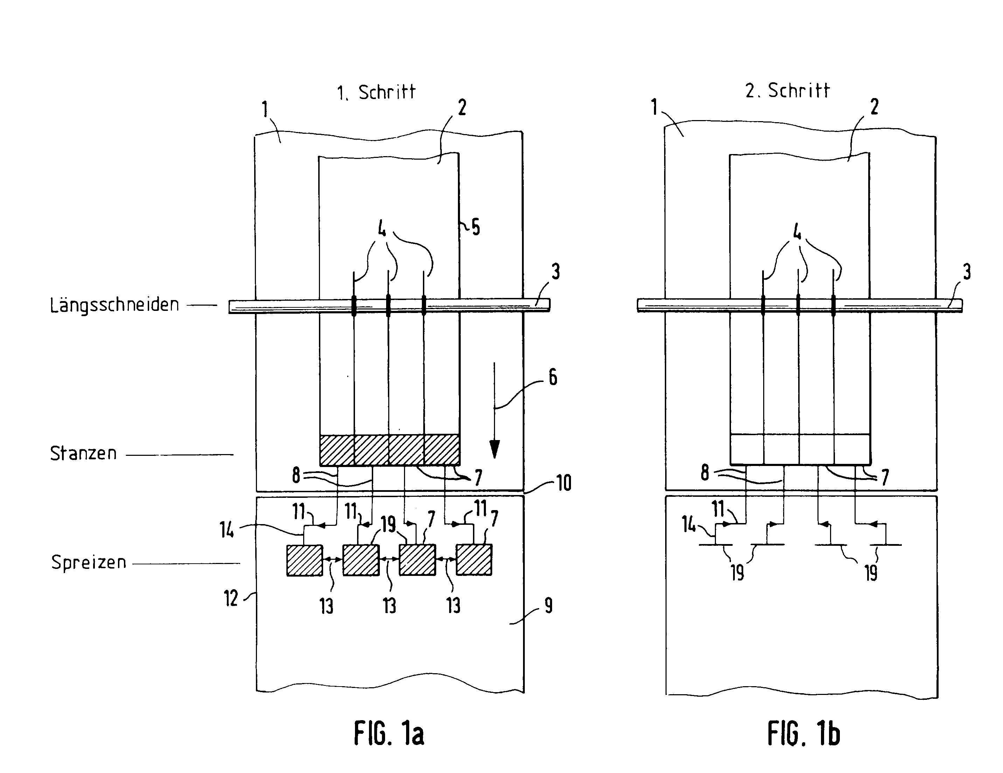

Gemäß Figur 1 wird auf einem ersten Förderband 1 ein flach ausgewalztes Teigband 2 angeliefert und unterhalb einer Schneidwalze 3 längsgeschnitten vorbeibefördert. Diese erzeugt im Teigband 2 gemäß gezeichnetem Beispiel drei Längsschnitte 4, die parallel zu den Teigbandrändern 5 und parallel bzw. in Teigtransportrichtung 6 verlaufen. Am stirnseitigen Ende kommt das Teigband 2 in Eingriff mit vier voneinander unabhängig bewegbaren Stanzwerkzeugen 7, die in der Stanzposition am Stirnende des Teigbandes 2 aneinander angrenzend positioniert sind. Nach Vollendung des Stanzvorgangs wird den einzelnen Stanzwerkzeugen 7 zunächst eine Linearbewegung 8 in Teigtransportrichtung bzw. parallel zu den Teigband-Längsrändern erteilt. Dabei werden die ausgestanzten Teigstücke zwischen den Schneidelemente der Stanzwerkzeuge 7 verschoben und dabei auf das zweite, gegebenenfalls schneller laufende Förderband 9 bewegt, das an das erste Förderband 1 über einen Spalt 10 anschließt. Im Anfangsbereich des zweiten Förderbandes 9 wird die erste Linearbewegung 8 umgewandelt in eine im Winkel von 90° dazu verlaufende Linear- Querbewegung 11, die nach außen zum Längsrand 12 des zweiten Förderbandes 9 gerichtet ist. Dies gilt analog für alle einzelnen Stanzwerkzeuge 7, wobei die Linearquerbewegungen 11 der in der Reihe innen liegenden Stanzwerkzeuge kürzer als die der außen liegenden sind. Sind den Stanzwerkzeugen 7 durch die Linearquerbewegungen 11 ausreichende und übereinstimmende Abstände 13 voneinander (in Querrichtung zur Teigtransportrichtung 6 verlaufend) erteilt, wird die Teigstück- Verschiebebewegung der Stanzwerkzeuge 7 wiederum um weitere 90° und wieder in Teigtransportrichtung 6 verlaufend geändert - vgl. zweite Linearbewegung 14. Nach der Vollendung werden die zwischen den Schneidelementen der Stanzwerkzeuge befindlichen Teigstücke davon entfernt und abgelegt, wie in Figur 1b durch die "leer" gezeichneten Stanzwerkzeuge 7 veranschaulicht. Sodann wird die zweite Linearbewegung 14 in umgekehrter Richtung vollzogen, ebenso die Linearquerbewegung 11, so daß die einzelnen, leeren Stanzwerkzeuge 7 aneinandergefahren werden. Auch die erstgenannte Linearbewegung 8 wird gegenüber Figur 1a umgekehrt vollzogen, bis sich die vier Stanzwerkzeuge über dem stirnseitigen Ende des Teigbandes 2 erneut befinden. Sodann kann ein erneuter Stanz- und Transportzyklus mit der dem Auseinanderspreizen dienenden Linearquerbewegung 11 erfolgen. Eine Drehung der Stanzwerkzeuge ist hier nicht erforderlich, weil die Teigstückkonturen bezüglich ihrer Mittelachse parallel zur Teigtransportrichtung jeweils symmetrisch sind.

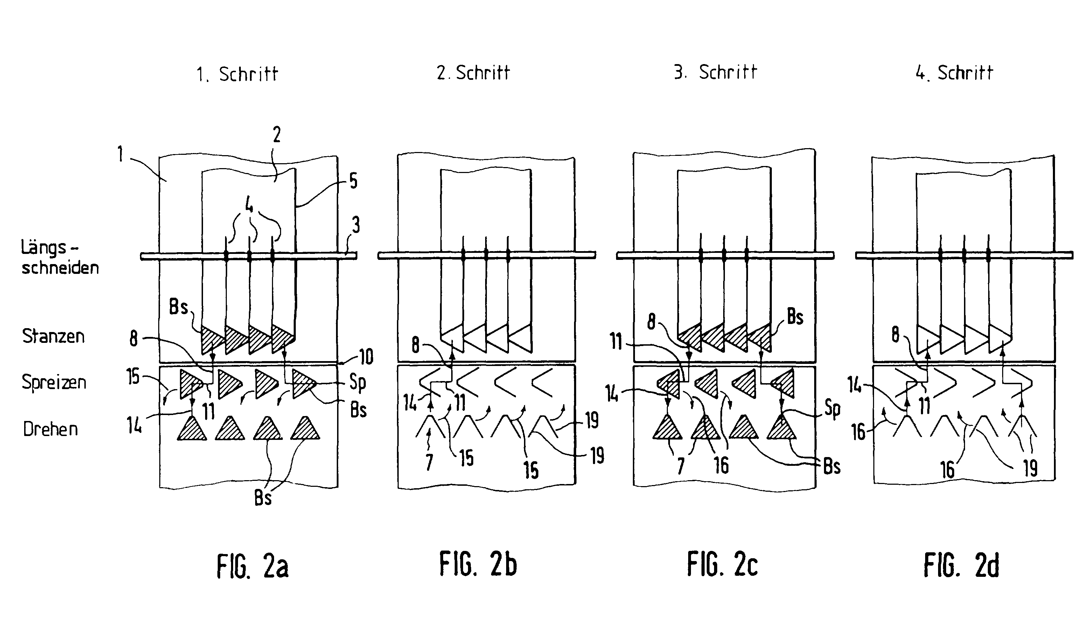

Anders nach Figur 2a, bei der die Teigstücke mit einer Kontur etwa der eines gleichschenkligen Dreiecks ausgestanzt werden, wobei die dem Basisschenkel Bs gegenüberliegende Dreiecksspitze Sp abgestumpft ist. In der Phase des Stanzens werden die Teigstückkonturen so aneinanderliegend ausgestanzt, daß von den vier Stanzwerkzeugen bzw. ausgestanzten Teigstücken die von links ersten drei Teigstücke mit ihrer jeweiligen Dreiecksspitze Sp am Basisschenkel Bs des benachbarten Teigstücks bzw. der benachbarten Schneidkontur anliegen. Sodann werden die Teigstücke innerhalb der Schneidelemente der Stanzwerkzeuge 7 analog Figur 1a verschoben, allerdings mit dem Zusatz, daß beim Übergang von der Linearquerbewegung 11 zur zweiten Linearbewegung 14 in Teigtransportrichtung 6 eine Drehung 15 um 90° entgegen dem Uhrzeigersinn vollzogen wird. Damit werden die Teigstücke bzw. die diese erfassende Stanzwerkzeuge mit dem Basisschenkel Bs nach vorne in Teigtransportrichtung 6 weisend ausgerichtet.

Gemäß Figur 2b werden den - nunmehr von den Teigstücken entleerten - Stanzwerkzeugen 7 die Bewegungen 14, 11, 8 in umgekehrter Richtung (analog zu Figur 1b) erteilt, wobei während der unmittelbar dem Teigstück- Ablegen nachfolgenden Linearbewegungsphase 14 den Stanzwerkzeugen 7 eine weitere Drehung 15 entgegen dem Uhrzeigersinn um 90° erteilt wird.

Gemäß Figur 2c ist dadurch das Ausstanzen einer weiteren gleichschenkligen Teigstückreihe ohne Anfall von Restteig möglich. Die Stanzwerkzeuge können über dem stirnseitigen Ende des Teigbandes 2 so positioniert werden, daß ein Teil ihrer Schneidkonturen mit dem im vorausgegangenen Stanzschritt entstandenen, sägezahnförmigen Stirnrand des Teigbandes 2 sich deckt. Dabei ist die jeweilige Dreiecksspitze Sp gegenüber dem vorausgegangen Stanzschritt gemäß Figur 2a entgegengesetzt (in Figur 2c nach links) gerichtet. Nach dem Stanzvorgang folgen die Bewegungen 8 zum Entfernen vom Teigbandende, 11 zum Auseinanderspreizen der einzelnen Teigstücke voneinander und 14 zur Ablage der Teigstücke analog Figur 2a. Lediglich beim Übergang von der Spreizbewegung 11 zur Ablagebewegung 14 wird den einzelnen Teigstücken bzw. den diese haltenden und verschiebenden Stanzwerkzeugen 7 eine Drehung 16 um 90° nun im Uhrzeigersinn erteilt. Dies gilt auch für die zweite Rückbewegungsphase nach Figur 2d im vierten Schritt, die ansonsten wie nach Figur 2b abläuft. Mit Beendigung dieses vierten Schrittes läßt sich die Teigstückreihe wieder mit derselben Ausrichtung wie nach Figur 2a ausstanzen.

Wie aus Fig. 1b ersichtlich, ist beim Stanzwerkzeug 7 nur eine einzige, quer zur Teigtransportrichtung 6 verlaufende Schneidkante 19 notwendig, mit der das freigeschnittene Teigstück von hinten in Teigtransportrichtung 6 geschoben werden kann. Denn die Längsschnitte 4 sind bereits von der Schneidwalze 3 erzeugt.

Analog ist nach Fig.2b und 2d beim Stanzwerkzeug 7 für de Teigtransportrichtung 6 n Basisschenkel Bs eine eigene Schneidkante nicht notwendig.

Zu bemerken ist noch, daß nach Figuren 1a, 1b und 2a - 2d beim Auseinanderspreizen 11 von den vier Stanzwerkzeugen den beiden linken eine Linearquerbewegung 11 nach links und den beiden rechten eine Linearquerbewegung nach rechts erteilt wird. Ferner wird den jeweils äußeren Stanzwerkzeugen 7 eine weitere bzw. längere und aus Synchronisationsgründen schnellere Linearquerbewegung 11 als den beiden inneren Stanzwerkzeugen eingeprägt. Damit lassen sich übereinstimmende Abstände 13 zwischen den Teigstücken 17 erzielen. Beim Ausführungsbeispiel nach Figur 2a - d wird die Basisschenkelseite des Teigstücks jeweils von der Schneidwalze 3 erzeugt.

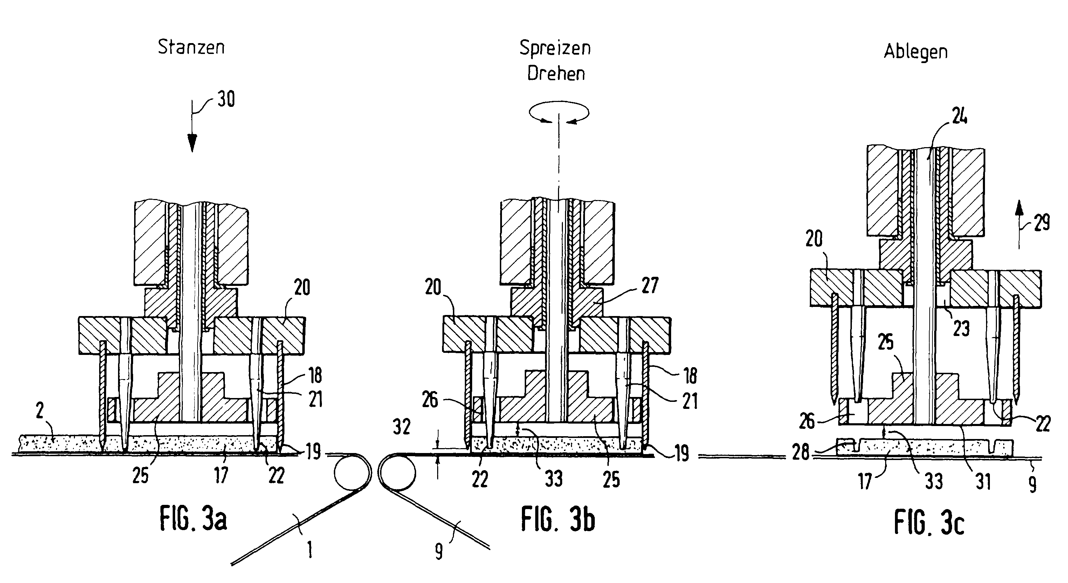

Gemäß Figur 3a wird ein Teigstück 17 innerhalb von Schneidelementen 18 mit Schneidkanten 19 gerade aus dem Teigband 2 ausgeschnitten. Die sonstigen Schneidkanten können nicht mehr zur Schneidwirkung kommen, weil bereits im vorangehenden Stanzschritt die Quer- oder Schrägschnitte (vgl. Fig.1 oder 2) vom Stanzwerkzeug in 180 Grad gedrehter Stellung sowie die Längsschnitte 4 von der Schneidwalze 3 erzeugt wurden. Die Schneidelemente 18 sind an der Unterseite einer ersten Halteplatte 20 des erfindungsgemäßen Schneidwerkzeugs befestigt. Innerhalb dieser Schneidelemente 20 und parallel dazu verlaufen Greifdorne 21, die ebenfalls an der ersten Halteplatte 20 befestigt sind. Diese ist soweit in Richtung zum Teigband 2 bzw. Teigstück 17 gefahren, daß die Dornspitzen 22 in die Teigmasse eingedrungen sind und so das Teigstück 17 stabil zwischen den Schneidelementen 18 halten. Die erste Halteplatte 20 ist mit einer mittigen Bohrung 23 versehen, durch die ein Tragschaft 24 mit einer zweiten Halteplatte 25 an seinem unteren Ende verläuft. Im peripheren Bereich ist die zweite Halteplatte 25 mit Randbohrungen 26 versehen, durch die die Greifdorne 21 verschiebbar geführt sind. Über den verschiebbar gelagerten Tragschaft können die erste und die zweite Halteplatte 20 bzw. 25 gegeneinander verschoben werden. Hierzu dienen (nicht gezeichnete) Antriebsmittel, die am Tragschaft 24 und/oder in der ersten Halteplatte 20 angreifen. Dazu ist die erste Halteplatte 20 auf ihrer Oberseite im mittigen Bereich an einer Zylinderbüchse 27 befestigt. Die Unterseite der zweiten Halteplatte 25 kann noch mit (nicht gezeichneten) Erhöhungen oder Vertiefungen versehen sein, die zum Einprägen in die Oberseite des Teigstückes 17 vorgesehen sind. Dadurch können zum Beispiel Markierungen geschaffen werden, die den Ablageort für Speisezutaten wie Obststückchen kennzeichnen.

Gemäß Figur 3b ist der Stanzvorgang beendet, und das Teigstück 17 weiterhin zwischen den Schneidelementen 18 und von den Greifdornen 21 gehalten. Die Halteplatte 25 ist gegenüber ihrer Stellung nach Fig 3a ein wenig, beispielsweise um einen halben Millimeter, angehoben (vgl. Hub 32 in Fig. 3b), damit die Transportband-Oberfläche nicht beschädigt wird. Dieser Zustand eignet sich zum Spreizen und/oder Drehen des Teigstücks beziehungsweise zum Gleiten des Stanzwerkzeugs auf der Teigbandoberfläche, entsprechend den Bewegungen 11, 15 und 16 gemäß Figuren 2a - 2d. Nach Figur 3c ist das Teigstück 17 von der zweiten Halteplatte 25, die gegenüber der ersten, mit einer Aufwärtsbewegung 29 nach oben verfahrenen Halteplatte 20 festgehalten worden ist, gegenüber den Schneidelementen 18 und dem Greifdorn 21 abgestreift. Die Eindrücke 28 aufgrund der Dornspitzen 22 sind noch ersichtlich. Zur Vorbereitung des nächsten Stanzvorgangs gemäß Figur 3a bzw. Figur 2a bzw. Figur 1a wird nun dem Stanzwerkzeug mit dem Tragschaft 24 mit der zweiten Halteplatte 25 eine Aufwärtsbewegung 29 erteilt, und es wird aus der Position gemäß Fig. 3c in die Position gemäß Fig.3a zurückverfahren. Beim Stanzvorgang gemäß Fig. 3a wird der ersten Halteplatte 20 eine Abwärtsbewegung 30 erteilt, so daß die Schneidelemente 18 und die Dornenspitzen 22 in Eingriff mit dem Teigband 2 kommen und dieses durchtrennen und das resultierende Teigstück 17 halten. Die zweite Halteplatte 25 wird immer mit einem bestimmten Abstand 33 über den Teig gehalten, es sei denn, ihre Unterseite wird zusätzlich zum Prägen der Teigstück-Oberfläche eingesetzt (siehe oben).

## Patentansprüche

1. Verfahren zur Herstellung einzelner Teigstücke (17) aus einer kontinuierlichen Teigbahn (2), indem mittels Schneidmittel in den Endabschnitt der Teigbahn (2) ohne Anfall von Restteig eine schräg oder quer zur Bahnlängsrichtung verlaufende Reihe von separaten, jeweils in sich geschlossenen Konturen ausgeschnitten wird, welche den Teigstücken (17) entsprechen, und diese in Reihe aneinander liegenden Konturen beziehungsweise Teigstücke (17) vom Bahnende entfernt (8) und zur Weiterverarbeitung voneinander quer oder schräg zur Bahnlängsrichtung auseinander bewegt (11) und abgelegt (14) werden, **dadurch gekennzeichnet, daß** zum Entfernen(8), zum Auseinanderbewegen (11) und zum Ablegen (14) der ausgeschnittenen Teigstücke (17) vollständig oder teilweise die Schneidmittel verwendet werden, die zum Ausschneiden der Teigstückreihe am Bahnende eingesetzt wurden, und nach dem Ablegen (14) die Schneidmittel für ein erneutes Ausschneiden zum Bahnende zurückbewegt werden.

2. Verfahren nach Anspruch 1, dadurch gekennzeichnet, daß von den Schneidmitteln ein Teil (3) stationär beziehungsweise ortsfest gehalten und zum Schneiden eines Teils, beispielsweise eines in Transportrichtung (6) länglichen Schnittes (4), der jeweiligen Teigstückkontur verwendet wird, während ein anderer oder der andere, zur Bewegung der Teigstücke (17) eingesetzte Teil (7) der Schneidmittel zur Vervollständigung der jeweiligen Teigstückkontur verwendet wird.

3. Verfahren nach Anspruch 1 oder 2, dadurch gekennzeichnet, daß als Schneidmittel mehrere Schneidstempel, Scher- und/oder Stanzwerkzeuge (7) jeweils mit einem Oberteil verwendet werden, das einen oder mehrere, die Konturen erzeugende Schneidkanten (19) oder -abschnitte (18) zur Erzeugung der Teigstückreihe aufweist, und die Stanzwerkzeuge (7) zu deren Entfernung vom Bahnende vollständig oder teilweise linear bewegt, voneinander in Teigbahn-Querrichtung entfernt und positioniert werden, wobei die Teigstücke zwischen den Schneidelementen des Stanzwerkzeug-Oberteiles, gegebenenfalls unter Verwendung von Greif- oder Pick-Einrichtungen, gehalten und geführt und/oder verschoben werden.

4. Verfahren nach Anspruch 1, 2 oder 3, dadurch gekennzeichnet, daß nach dem Ausschneiden der Teigstückkonturen und vor dem Ablegen der Teigstücke (17) die Schneidmittel über der die Teigstücke tragenden Unterlage mit einem Abstand (32) positioniert werden, der ein Schonen von Schneidmittel-Schneidkanten (19) und der Unterlagen-Oberfläche und/oder deren Gleiten gegeneinander erlaubt.

5. Verfahren nach einem der vorangehenden Ansprüche, dadurch gekennzeichnet, daß nach ihrem Entfernen (8) vom Bahnende und während oder nach ihrem Auseinanderbewegen (11) den Teigstücken (17) eine Drehbewegung (15,16) überlagert oder eingeprägt wird.

6. Verfahren nach Ansprüche 4 oder 4 und 5, dadurch gekennzeichnet, daß unmittelbar nach dem Schneiden und/oder Stanzen der Teigstückkonturen für das weitere Entfernen (8) vom Teigbandende, Auseinanderbewegen (11) voneinander und das Ablegen (14) der Teigstücke (17) der Druck auf das Stanzwerkzeug-Oberteil (18,20) gegen das Stanzwerkzeug-Unterteil soweit zurückgenommen wird, daß das Oberteil (18,20) mit seinen Schneidkanten (19) auf der Oberfläche des Stanzwerkzeug-Unterteils gleiten und/oder darüber bewegt werden kann.

7. Verfahren nach Ansprüche 4, 4 und 5, 6, dadurch gekennzeichnet, daß als Schneid- und/oder Stanzwerkzeug-Unterteil ein Teigförderband verwendet wird, das mit einer schnittfesten Oberfläche versehen ist.

8. Verfahren nach Anspruch 7, dadurch gekennzeichnet, daß das Teigförderband während des Teigstück-Stanzvorgangs angehalten und dann wieder in Bewegung versetzt und/oder getaktet bewegt wird.

9. Verfahren nach Anspruch 7 oder 8, dadurch gekennzeichnet, daß nach jedem Stanzvorgang das Teigförderband in Teigförderrichtung (6) um eine Strecke verfahren wird, die der Abmessung (Bs) der Kontur oder des Teigstücks (17) in Bahnlängsrichtung (12) entspricht.

10. Verfahren nach Anspruch 9, wobei die Kontur beziehungsweise das Teigstück (17) die Form eines gleichschenkligen Dreiecks oder symmetrischen Trapezes aufweisen, von dem die Basisseite (Bs) in oder parallel zur Teigbandlängsrichtung (12) verläuft, dadurch gekennzeichnet, daß die Verfahr-Strecke der halben Länge der Basisseite (Bs) entspricht.

11. Verfahren nach einem der vorangehenden Ansprüche, dadurch gekennzeichnet, daß mehrere, jeweils eine Teigstück-Kontur erzeugende Schneidmittel (7) nebeneinander im Teigbahn-Endbereich angeordnet und vereinzelt zueinander synchronisiert und/oder koordiniert betätigt und, die Teigstücke (17) transportierend, bewegt und nach deren Ablage zurückbewegt werden.

12. Verfahren nach einem der vorangehenden Ansprüche, wobei die Kontur beziehungsweise das Teigstück (17) die Form eines gleichschenkligen Dreiecks oder eines Trapezes aufweisen, von dem die Basisseite (Bs) in Teigbandlängsrichtung (12) verläuft, gekennzeichnet durch eine Drehung (15,16) der Schneidmittel (17) derart, daß die Teigstücke (17) mit ihrer Basisseite (Bs) jeweils quer zur Teigtransportrichtung (6) verlaufend und in Teigtransportrichtung (6) nach vorne gewandt zur Ablage kommen.

13. Verfahren nach einem der vorangehenden Ansprüche, dadurch gekennzeichnet, daß nach dem Teigstück-Ausschneiden und vor dem Teigstück-Ablegen die Schneidmittel (7) mit den ausgeschnittenen Teigstücken (17) zunächst vom Bahnende linear in Bahnlängsrichtung entfernt (8) und dann schräg oder quer zur Bahnlängsrichtung (12) und auseinander bewegt (11) werden, und/oder nach dem Teigstück-Ablegen und vor dem erneuten Teigstück-Ausschneiden die Schneidmittel (7) ohne die bereits abgelegten Teigstücke (17) zunächst schräg oder quer zur Bahnlängsrichtung (12) und aufeinander (11) und dann zum Bahnende linear zurückbewegt (8) werden.

14. Verfahren nach einem der vorangehenden Ansprüche, dadurch gekennzeichnet, daß die Geschwindigkeit zum Entfernen (8) der Teigstücke (17) vom Teigbahnende die Geschwindigkeit zum Transport der Teigbahn wesentlich übersteigt.

15. Verfahren nach einem der vorangehenden Ansprüche, wobei die Schneidkontur der Schneidmittel (17) beziehungsweise die Teigstückform (17) in bezug auf eine quer zur Bahnlängsrichtung (12) verlaufende Mittelachse symmetrisch ist, dadurch gekennzeichnet, daß zwischen jedem Teig-Schneidvorgang die Schneidmittel (17) um 180 Grad vorzugsweise in abwechselnder Richtung (15,16) gedreht werden.

16. Verfahren nach Anspruch 15, dadurch gekennzeichnet, daß die Drehung (15,16) um 180 Grad in separaten Abschnitten mit und ohne jeweiliges Teigstück (17) erfolgt.

17. Verfahren nach einem der vorangehenden Ansprüche, dadurch gekennzeichnet, daß zum Ablegen der Teigstücke (17) Ausstoß- und/oder Abstreifmittel (25) verwendet werden, die mit den Schneidkanten (19) der Schneidmittel (7) in Wirkungsverbindung gesetzt werden, indem diese und die Ausstoß- und/oder Abstreifmittel (25) relativ zueinander verstellt werden.

18. Verfahren nach einem der vorangehenden Ansprüche, dadurch gekennzeichnet, daß den die Teigstücke (17) bewegenden Schneid- oder Stanzmitteln Greifer- oder Pick-Einrichtungen (21) beigeordnet und in Eingriff mit den Teigstücken (17) gebracht werden.

19. Schneid- und/oder Stanzwerkzeug zur Durchführung des Verfahrens nach einem der vorangehenden Ansprüche, welches Werkzeug mit der Teigstückkontur ganz oder teilweise versehen und von Antriebsmitteln betätigbar und zum Zusammenwirken mit einem gegenüberliegenden Tisch als Auf-, Unter- oder Ablage für das Teigband (2) und die daraus geschnittenen Teigstücke (17) ausgebildet ist, **gekennzeichnet durch** eine Schneidelemente (7) mit der Teigstückkontur aufweisende Halte- oder Schneidplatte (20) und eine Teigausstoßplatte (25), welche beiden Platten (20,25) gegeneinander in Stanzhubrichtung (30) mittels der Antriebsmittel und/oder eines Federelements verstellbar verbunden sind, wobei die Teigausstoßplatte (25) unmittelbar neben den Schneidelementen (18) und/oder an diesen gleitbar mit einem Verstellhub angeordnet ist, der sich beidseits der Schneidkante (19) des Schneidelements (18) erstreckt, um das jeweilige Teigstück (17) zwischen den Schneidelementen (18) auszustoßen und/oder davon abzustreifen.

20. Werkzeug nach Anspruch 19, dadurch gekennzeichnet, daß eine Schneidelemente (18) mit der Teigstückkontur aufweisende Halte- oder Schneidplatte (20) und eines oder mehrere, als Greifer- und/oder Pick-Einrichtungen dienende Dornelemente (21) vorgesehen sind, die an der Halteplatte (20) innerhalb der Schneidelemente (18) so angeordnet sind, daß ihre Spitzen (22) den Teigstücken (17) zugeordnet sind, und
daß die Teigausstoßplatte (25) durchgehende Bohrungen (26) für den Durchtritt der Dornelemente (21) an der Halteplatte (20) aufweist.

21. Werkzeug nach Ansprüche 19, 20 oder 21, dadurch gekennzeichnet, daß die Ausstoßplatte (25) an einem Tragschaft (24) befestigt ist, der innerhalb der ersten Halteplatte (20), diese durchsetzend, beweglich (29,30) gelagert und/oder zur Verbindung mit den Antriebsmitteln betätigbar ist.

22. Werkzeug nach einem der vorangehenden Ansprüche 19-21, dadurch gekennzeichnet, daß die dem Teigstück (17) zugewandte Unterseite (31) der Halteplatte (20) und/oder der Teigausstoßplatte (25) mit Erhöhungen, vorstehenden Kanten und/oder Vertiefungen versehen ist, deren Verlauf und Konturen Schlitzen, textlichen oder figürlichen Darstellungen, Muster, Markierungen oder sonstigen Informationen entsprechen und zum Einprägen in die Teigstück-Oberseite vorgesehen sind.

## Claims

1. Method of manufacturing individual dough pieces (17) from a continuous dough strip (2), in that by means of cutting means a row of separate, self-contained contours, extending obliquely or transversely to the strip longitudinal direction, is cut out in the end section of the dough strip (2) without leaving any residual dough, the contours corresponding to the dough pieces (17), and these contours or dough pieces (17) abutting one another in a row are removed (8) from the strip end and are moved apart (11) transversely or obliquely to the strip longitudinal direction and are deposited (14) for further processing, characterised in that for removal (8), moving apart (11), and depositing (14) of the cut-out dough pieces (17), the cutting means are used fully or in part, which were used for cutting out the row of dough pieces at the strip end, and after depositing (14), the cutting means are moved back for repeated cutting out to the strip end.

2. Method according to claim 1, characterised in that of the cutting means, part (3) is held stationary or fixed, and is used for cutting a part, e.g. an elongate cut (4) in the conveying direction (6), of the respective dough-piece contour, whilst another or the other part (7) of the cutting means used for moving the dough pieces (17) is used to complete the respective dough-piece contour.

3. Method according to claim 1 or 2, characterised in that as cutting means, a plurality of cutting stamps, shearing and/or punching tools (7) are used, each with an upper part, which has one or more contour-generating cutting edges (19) or sections (18) for generating the row of dough pieces, and the punching tools (7) are moved in full or in part linearly for their removal from the strip end, are removed apart in the dough strip transverse direction and are positioned, the dough pieces being held, guided and/or pushed between the cutting elements of the punching tool upper part, optionally with the use of grabbing or picking devices.

4. Method according to claim 1, 2 or 3, characterised in that after cutting out of the dough-piece contours and before depositing of the dough pieces (17), the cutting means are positioned over the substrate carrying the dough pieces with clearance (32), which spares the cutting means cutting edges (19) and the substrate surface and/or permits them to slide against one another.

5. Method according to one of the preceding claims, characterised in that after their removal (8) from the strip end and during or after their moving apart (11), a rotary movement (15, 16) is superimposed or impressed upon the dough pieces (17).

6. Method according to claims 4 or 4 and 5, characterised in that directly after cutting and/or punching of the dough-piece contours for the further removal (8) from the dough strip end, moving apart (11) and depositing (14) of the dough pieces (17), the pressure on the punching tool upper part (18, 20) against the punching tool lower part is reduced until the upper part (18, 20) can slide and/or be moved with its cutting edges (19) over the surface of the punching tool lower part.

7. Method according to claims 4, 4 and 5, 6, characterised in that as a cutting and/or punching tool lower part, a dough conveyor belt is used, which is provided with a cut-resistant surface.

8. Method according to claim 7, characterised in that the dough conveyor belt is stopped during the dough-piece punching operation and is then set in motion and/or moved in time again.

9. Method according to claim 7 or 8, characterised in that after every punching operation the dough conveyor belt is moved a section in the dough conveying direction (6) which corresponds to the dimension (Bs) of the contour or of the dough piece (17) in the strip longitudinal direction (12).

10. Method according to claim 9, wherein the contour or dough piece (17) has the shape of an equilateral triangle or symmetrical trapezium, of which the base side (Bs) extends in or parallel to the dough strip longitudinal direction (12), characterised in that the travel distance is half the length of the base side (Bs).

11. Method according to one of the preceding claims, characterised in that a plurality of cutting means (7), each producing a dough-piece contour, are disposed adjacent to one another in the dough strip end region and are separately actuated, synchronised and/or co-ordinated to one another and, conveying the dough pieces (17), are moved and moved back after depositing the dough pieces.

12. Method according to one of the preceding claims, wherein the contour or the dough piece (17) has the shape of an equilateral triangle or of a trapezium, of which the base side (Bs) extends in the dough strip longitudinal direction (12), characterised by a rotation (15, 16) of the cutting means (17), such that the dough pieces (17) are deposited with their base side (Bs) respectively extending transverse to the dough conveying direction (6) and facing forward in the dough conveying direction (6).

13. Method according to one of the preceding claims, characterised in that after cutting out of the dough piece and before depositing thereof, the cutting means (7) are removed with the cut-out dough pieces (17) first from the strip end linearly in the strip longitudinal direction and are then moved apart (11) obliquely or transversely to the strip longitudinal direction (12), and/or after depositing of the dough piece and before cutting out of the next dough piece, the cutting means (7), without the already deposited dough pieces (17) are moved back (8) first obliquely or transversely to the strip longitudinal direction (12) and on one another (11) and then linearly to the strip end.

14. Method according to one of the preceding claims, characterised in that the speed of removal (8) of the dough pieces (17) from the dough strip end substantially exceeds the speed of conveying of the dough strip.

15. Method according to one of the preceding claims, wherein the cutting contour of the cutting means (17) or the dough piece shape (17) is symmetrical relative to a central axis extending transverse to the strip longitudinal direction (12), characterised in that between each dough cutting operation the cutting means (17) are rotated through 180 degrees preferably in alternating directions (15, 16).

16. Method according to claim 15, characterised in that the rotation (15, 16) through 180 degrees is effected in separate stages, with and without a respective dough piece (17).

17. Method according to one of the preceding claims, characterised in that in order to deposit the dough pieces (17), ejection and/or scraper means (25) are used, which are set in active combination with the cutting edges (19) of the cutting means (7), in that these and the ejection and/or scraper means (25) are adjusted relative to one another.

18. Method according to one of the preceding claims, characterised in that grabbing or picking devices (21) are allocated to the cutting or punching means moving the dough pieces (17) and are brought into mesh with the dough pieces (17).

19. Cutting and/or punching tool for carrying out the method according to one of the preceding claims, which tool is wholly or partly provided with the dough-piece contour and is actuatable by drive means and is formed for co-operation with an opposing table as a support, substrate or depositing surface for the dough strip (2) and the dough pieces (17) cut therefrom, characterised by a cutting element (7) with a holding or cutting plate (20) having the dough-piece contour and by a dough-ejection plate (25), both of which plates (20, 25) are adjustably joined together relative to one another in the punch stroke direction (30) by means of the drive means and/or a spring element, wherein the dough-ejection plate (25) is disposed directly next to the cutting elements (18) and/or slidably thereon with a displacement stroke which extends on either side of the cutting edge (19) of the cutting element (18) in order to eject and/or scrape off the respective dough piece (17) between the cutting elements (18).

20. Tool according to claim 19, characterised in that a cutting element (18) is provided with the holding or cutting plate (20) having the dough-piece contour and one or more pin elements (21) acting as grabbing and/or picking devices are provided, which are so disposed on the holding plate (20) within the cutting element (18) that their tips (22) are allocated to the dough pieces (17), and that the dough-ejection plate (25) has through-bores (26) for the passage of the pin element (21) on the holding plate (20).

21. Tool according to claims 19, 20 or 21, characterised in that the ejection plate (25) is fixed to a support shank (24), which is movably mounted within the first holding plate (20) so as to penetrate the same and/or is actuatable for connection to the drive means.

22. Tool according to one of the preceding claims 19-21, characterised in that the underside (31) of the holding plate (20) and/or of the dough-ejection plate (25) associated with the dough piece (17) is provided with prominences, projecting edges and/or recesses, whose curve and contours correspond to slots, text or images, patterns, markings or other data and are provided for imprinting in the dough-piece upper face.

## Revendications

1. Procédé pour produire des morceaux individuels de pâte (17) à partir d'une bande de pâte continue (2), selon lequel une rangée, qui s'étend obliquement ou transversalement par rapport à la direction longitudinale de la bande, de contours séparés, respectivement fermés sur eux-mêmes et correspondant aux morceaux de pâte (17), est découpée à l'aide de moyens de coupe dans la partie d'extrémité de la bande de pâte (2), sans production de pâte résiduelle, et ces contours ou morceaux de pâte (17), qui sont disposés les uns à côté des autres suivant une rangée, sont retirés (8) de l'extrémité de la bande et, pour la poursuite de leur traitement, sont écartés les uns des autres (11) transversalement ou obliquement par rapport à la direction longitudinale de la bande et sont déposés (14), caractérisé en ce que pour le retrait (8), pour l'écartement réciproque (11) et pour le dépôt (14) des morceaux de pâte découpés (17), on utilise, en totalité ou en partie, les moyens de coupe qui ont été employés pour découper la rangée de morceaux de pâte à l'extrémité de la bande et, après le dépôt (14), les moyens de coupe sont ramenés en arrière, pour un nouveau découpage, en direction de l'extrémité de la bande.

2. Procédé selon la revendication 1, caractérisé en ce qu'une partie (3) des moyens de coupe est maintenue immobile ou en position fixe et est utilisée pour le découpage d'une partie, par exemple d'un trait de coupe (4) allongé dans la direction de transport (6), du contour considéré de morceau de pâte, pendant qu'une autre partie (7) ou l'autre partie (7) des moyens de coupe, employée pour déplacer les morceaux de pâte (17), est utilisée pour compléter le contour considéré de morceau de pâte.

3. Procédé selon la revendication 1 ou 2, caractérisé en ce qu'on utilise, comme moyens de coupe, plusieurs poinçons de coupe, outils de cisaillement et/ou outils de poinçonnage (7), comportant chacun une partie supérieure qui possède une ou plusieurs arêtes de coupe (19) ou sections de coupe (18) produisant les contours, pour produire la rangée de morceaux de pâte, et on déplace linéairement, en totalité ou en partie, les outils de poinçonnage (7) pour les retirer de l'extrémité de la bande, on les écarte les uns des autres dans la direction transversale de la bande de pâte et on les positionne, les morceaux de pâte étant retenus et guidés et/ou déplacés entre les éléments de coupe de la partie supérieure de l'outil de poinçonnage, éventuellement moyennant l'utilisation de dispositifs de préhension ou de saisie.

4. Procédé selon la revendication 1, 2 ou 3, caractérisé en ce qu'après le découpage des contours des morceaux de pâte et avant le dépôt des morceaux de pâte (17), on positionne les moyens de coupe au-dessus du support qui porte les morceaux de pâte, à une distance (32) qui permet de ménager les arêtes de coupe (19) des moyens de coupe et la surface supérieure du support et/ou le glissement des unes par rapport à l'autre.

5. Procédé selon l'une des revendications précédentes, caractérisé en ce qu'après leur retrait (8) de l'extrémité de la bande et pendant ou après leur écartement (11), on applique en superposition ou on imprime aux morceaux de pâte (17) un mouvement de rotation (15, 16).

6. Procédé selon la revendication 4 ou les revendications 4 et 5, caractérisé en ce que juste après le découpage et/ou le poinçonnage des contours des morceaux de pâte, pour le retrait ultérieur (8) de l'extrémité de la bande de pâte, l'écartement réciproque (11) et le dépôt (14) des morceaux de pâte (17), on réduit la pression appliquée sur la partie supérieure (18, 20) de l'outil de poinçonnage en direction de la partie inférieure de l'outil de poinçonnage, dans une mesure suffisante pour que la partie supérieure (18, 20) puisse glisser, par ses arêtes de coupe (19), sur la surface supérieure de la partie inférieure de l'outil de poinçonnage et/ou puisse être déplacée au-dessus de cette surface.

7. Procédé selon les revendications 4, 4 et 5, 6, caractérisé en ce qu'on utilise comme partie inférieure de l'outil de coupe et/ou de l'outil de poinçonnage, une bande de convoyage de la pâte, qui possède une surface supérieure résistant à l'entaillage.

8. Procédé selon la revendication 7, caractérisé en ce que pendant l'opération de poinçonnage des morceaux de pâte, la bande de convoyage de la pâte est arrêtée et est ensuite remise en mouvement et/ou déplacée par pas.

9. Procédé selon la revendication 7 ou 8, caractérisé en ce qu'après chaque opération de poinçonnage, la bande de convoyage de la pâte est déplacée, dans la direction (6) de convoyage de la pâte, sur une distance qui correspond à la dimension (Bs) du contour ou du morceau de pâte (17) dans la direction longitudinale (12) de la bande.

10. Procédé selon la revendication 9, selon lequel le contour ou le morceau de pâte (17) possède la forme d'un triangle isocèle ou d'un trapèze symétrique, dont le côté de base (Bs) s'étend dans la direction longitudinale (12) de la bande de pâte ou parallèlement à cette direction, caractérisé en ce que la distance de déplacement correspond à la moitié de la longueur du côté de base (Bs).

11. Procédé selon l'une des revendications précédentes, caractérisé en ce que plusieurs moyens de coupe (7), qui produisent chacun un contour de morceau de pâte, sont disposés côte-à-côte dans la partie d'extrémité de la bande de pâte et actionnés individuellement de façon synchronisée et/ou coordonnée les uns sur les autres, et sont déplacés en transportant les morceaux de pâte (17) et ramenés en arrière après le dépôt de ces derniers.

12. Procédé selon l'une des revendications précédentes, selon lequel le contour ou le morceau de pâte (17) possède la forme d'un triangle isocèle ou d'un trapèze, dont le côté de base (Bs) s'étend dans la direction longitudinale (12) de la bande de pâte, caractérisé par une rotation (15, 16) des moyens de coupe (17) faisant en sorte que les morceaux de pâte (17) viennent se déposer avec leur côté de base (Bs) disposé transversalement à la direction (6) de transport de la pâte et tourné vers l'avant dans la direction (6) de transport de la pâte.

13. Procédé selon l'une des revendications précédentes, caractérisé en ce qu'après le découpage des morceaux de pâte et avant le dépôt des morceaux de pâte, les moyens de coupe (7), avec les morceaux de pâte découpés (17), sont tout d'abord retirés (8) linéairement de l'extrémité de la bande, dans la direction longitudinale de la bande, et ensuite sont déplacés obliquement ou transversalement par rapport à la direction longitudinale (12) de la bande en étant écartés (11) les uns des autres, et/ou après le dépôt des morceaux de pâte et avant le nouveau découpage de morceaux de pâte, les moyens de coupe (7), sans les morceaux de pâte (17) déjà déposés, sont ramenés en arrière, tout d'abord obliquement ou transversalement par rapport à la direction longitudinale (12) de la bande, en étant rapprochés les uns des autres (11), puis linéairement en direction de l'extrémité de la bande (8).

14. Procédé selon l'une des revendications précédentes, caractérisé en ce que la vitesse de retrait (8) des morceaux de pâte (17) de l'extrémité de la bande de pâte dépasse nettement la vitesse de transport de la bande de pâte.

15. Procédé selon l'une des revendications précédentes, selon lequel le contour de découpage des moyens de coupe (17) ou la forme (17) des morceaux de pâte est symétrique par rapport à un axe médian qui s'étend transversalement à la direction longitudinale (12) de la bande, caractérisé en ce qu'entre chaque opération de découpage de la pâte, les moyens de coupe (17) subissent une rotation de 180 degrés, de préférence dans des sens alternés (15, 16).

16. Procédé selon la revendication 15, caractérisé en ce que la rotation (15, 16) sur 180 degrés se fait par phases séparées, avec et sans morceau de pâte respectif (17).

17. Procédé selon l'une des revendications précédentes, caractérisé en ce que pour le dépôt des morceaux de pâte (17), on utilise des moyens d'éjection et/ou de démoulage (25), qui sont amenés à coopérer avec les arêtes de coupe (19) des moyens de coupe (7), par le fait que ces moyens de coupe et les moyens d'éjection et/ou de démoulage (25) sont déplacés les uns par rapport aux autres.

18. Procédé selon l'une des revendications précédentes, caractérisé en ce que des dispositifs de préhension ou de saisie (21) sont adjoints aux moyens de coupe ou de poinçonnage, qui déplacent les morceaux de pâte (17), et sont amenés en prise avec les morceaux de pâte (17).

19. Outil de coupe et/ou de poinçonnage pour la mise en oeuvre du procédé selon l'une des revendications précédentes, lequel outil est pourvu en totalité ou en partie du contour des morceaux de pâte et peut être actionné par des moyens d'entraînement et est conçu pour coopérer avec une table située en vis-à-vis en tant qu'élément d'appui, de support ou de dépôt pour la bande de pâte (2) et les morceaux de pâte (17) découpés dans cette bande, caractérisé par un élément de coupe (7) possédant une plaque de retenue ou de coupe (20), présentant le contour des morceaux de pâte, et une plaque d'éjection de pâte (25), lesquelles deux plaques (20, 25) sont reliées de manière à être déplaçables l'une par rapport à l'autre dans la direction de la course de poinçonnage (30) à l'aide des moyens d'entraînement et/ou d'un élément de ressort, la plaque d'éjection de pâte (25) étant disposée juste à côté des éléments de coupe (18) et/ou de manière à pouvoir glisser contre ces éléments sur une course de déplacement qui s'étend des deux côtés de l'arête de coupe (19) de l'élément de coupe (18), afin d'éjecter le morceau de pâte respectif (17) entre les éléments de coupe (18) et/ou de le démouler de ces derniers.

20. Outil selon la revendication 19, caractérisé en ce qu'il est prévu une plaque de retenue ou de coupe (20), qui comporte des éléments de coupe (18) ayant le contour des morceaux de pâte, et un ou plusieurs éléments formant broches (21) qui sont utilisés en tant que dispositifs de préhension et/ou de saisie et qui sont disposés sur la plaque de retenue (20), à l'intérieur des éléments de coupe (18), de telle sorte que leurs pointes (22) soient associées aux morceaux de pâte (17), et en ce que la plaque d'éjection de pâte (25) comporte des perçages traversants (26) pour le passage des éléments formant broches (21) disposés sur la plaque de retenue (20).

21. Outil selon la revendication 19 ou 20, caractérisé en ce que la plaque d'éjection (25) est fixée à une tige de support (24), qui est montée de manière à être déplaçable (29, 30) à l'intérieur de la première plaque de retenue (20), en traversant cette dernière, et/ou peut être actionnée pour la liaison avec les moyens d'entraînement.

22. Outil selon l'une des revendications précédentes 19 à 21, caractérisé en ce que la face inférieure (31), tournée vers le morceau de pâte (17), de la plaque de retenue (20) et/ou de la plaque d'éjection de pâte (25) est pourvue de reliefs, de bords saillants et/ou de creux, dont l'allure et les contours correspondent à des fentes, des représentations de textes ou de figures, des motifs, des marques ou d'autres informations et sont destinés à réaliser des empreintes dans la face supérieure du morceau de pâte.
